Europäisches Patentamt

European Patent Office

Office européen des brevets

(19)

(11) Veröffentlichungsnummer: **0 454 952 A1**

## (12) EUROPÄISCHE PATENTANMELDUNG

(21) Anmeldenummer: **91101885.1**

(22) Anmeldetag: **11.02.91**

(51) Int. Cl.⁵: **G01K 13/08**, G01N 11/14

(30) Priorität: **02.05.90 CH 1483/90**

(43) Veröffentlichungstag der Anmeldung:
**06.11.91 Patentblatt 91/45**

(84) Benannte Vertragsstaaten:
**DE FR GB IT**

(71) Anmelder: **Mettler-Toledo AG**
**Im Langacher**
**CH-8606 Greifensee(CH)**

(72) Erfinder: **Weissberg, Leo Ari**
**Stüssistrasse 58**
**CH-8057 Zürich(CH)**

(54) **Temperaturmessung in Rheologiegeräten.**

(57) Messungen von Rheologiegeräten können in bezug auf Genauigkeit und Reproduzierbarkeit verbessert werden mit der beschriebenen Methode zur Temperaturmessung. Die Temperatur der Probesubstanz im Messspalt (49) wird ermittelt aus Temperaturmessungen unmittelbar unter der dem Messspalt (49) zugewandten Oberfläche von Messkörper (41) und/oder Messbecher (46). Die für die Temperaturmessung notwendige Energie wird durch kaltlichtgespeiste Sonnenzellen (22/23.1) auf starr mit dem Messkörper (41) und/oder dem Messbecher (46) verbundenen, mitbewegenden Geräteteilen erzeugt, die von der Temperaturmessung erzeugten Signale werden kapazitiv oder optisch von den bewegten Teilen ausgekoppelt. Auf diese Art werden die Bewegungen weder des Messkörpers (41) noch des Messbechers (46) gestört und die rheologische Messung wird in keiner Weise beeinflusst. Für die Temperaturmessung werden von temperaturabhängigen Quarzen gesteuerte Oszillatoren oder temperaturabhängige Widerstände verwendet.

FIG. 4

EP 0 454 952 A1

Die Erfindung betrifft ein Verfahren gemäss dem Oberbegriff des unabhängigen Verfahrensanspruches und eine entsprechende Vorrichtung gemäss dem unabhängigen Vorrichtungsanspruch, mit denen die Temperatur der Probesubstanz im Messspalt eines Rheologiegerätes gemessen werden kann.

Rheologiegeräte dienen der Messung der viskosen Eigenschaften fliessfähiger Substanzen. Diese viskosen Eigenschaften sind stark von der Temperatur abhängig. Die Probesubstanz befindet sich für die Messung in einem Messbecher und ein Messkörper ist in der Probesubstanz eingetaucht. Der Zwischenraum zwischen Messbecher und Messkörper bildet den mit Probesubstanz gefüllten Messspalt, der unter Umständen nur wenige Zehntelmillimeter breit ist. Messbecher und Messkörper sind um die gleiche Rotationsachse drehbar angeordnet und werden relativ zueinander bewegt durch Vorgabe einer Drehgeschwindigkeit oder eines Drehmomentes, je nach Ausführungsform des Gerätes und/oder den Eigenschaften der zu messenden Substanz. Messkörper und Messbecher sind Präzisionsteile mit definierter Form und Oberfläche. Für eine variable Messspaltgeometrie stehen zu einen, bestimmten Gerätetyp verschiedene, austauschbare Messbecher zur Verfügung, deren Becherraum verschieden ausgestaltet, deren äussere Abmessungen aber gleich sind, sodass sie im gleichen Becherhalter eingesezt werden können.

Bei gewissen, heute gebräuchlichen Rheologiegeräten ist aus verschiedenen Erwägungen heraus, welche hier als gegeben anzunehmen sind und nicht zur Diskussion stehen, die Messwelle an einem dünnen Draht aufgehängt, der praktisch kein Drehmoment ausübt. Am unteren Ende der Messwelle ist der Messkörper angeformt, am oberen Ende ist sie so gestaltet, dass ein schnelles Auswechseln möglich ist. Der Messbecher wird mit dem Becherhalter mit varierender Geschwindigkeit gedreht.

Für jede rheologische Messung ist die Temperatur der Substanz wesentlich. Rheologiegeräte enthalten denn auch eine Heizung mit Thermostat, die rund um den Becherhalter angeordnet ist und von der aus Wärme durch Strahlung und Konvektion auf die Probesubstanz im Messbecher übertragen wird. Gemäss dem Stande der Technik wird die Heizungstemperatur gemessen und registriert und nach einer minimalen Equilibrierungszeit wird angenommen, dass die Temperatur der Probesubstanz im Messspalt dieser Heizungstemperatur entspricht.

Es ist nun aber offensichtlich, dass die Temperatur der Probesubstanz aus vielfältigen Gründen von der Heizungstemperatur abweichen kann, sei dies durch den Temperaturabfall zwischen Heizung und Umgebung, sei dies durch ungenügende Equilibrierungszeit oder durch Erwärmung der Probesubstanz durch Reibung während der Messung. Eine Temperaturmessung im Messspalt, oder so nahe wie möglich am Messspalt würde auf jeden Fall die Messungen und ihre Reproduzierbarkeit verbessern.

Es ist nun Aufgabe der Erfindung, ein Verfahren und eine Vorrichtung zur Temperaturmessung in Rheologiegeräten aufzuzeigen, mit denen die Temperatur der Probesubstanz, die zwischen -20 und 400 °C variieren kann, mit ausreichender Genauigkeit, d.h. auf 0,1 °C genau, zu messen. Die Vorrichtung zur Temperaturmessung darf in keiner Weise die rheologische Messanordnung stören oder verändern. Das heisst mit anderen Worten, die Temperaturmessung darf die Geometrie des Messspaltes nicht verändern und sie darf kein störendes Drehmoment auf Messkörper oder Messbecher ausüben, ihre sensorischen Teile zum Mindesten müssen sich aber im Messspalt, oder in unmittelbarer Nähe davon, also auf der Innenoberfläche des Messbechers und/oder auf der Oberfläche des Messkörpers befinden.

Diese Aufgabe wird gelöst, durch das Verfahren und die Vorrichtung zur Temperaturmessung in Rheologiegeräten, die durch die kennzeichnenden Teile der unabhängigen Patentansprüche bestimmt sind.

Das zur Lösung der Aufgabe vorgeschlagene Verfahren sieht Temperaturmessungen auf beiden Seiten des Messspaltes vor, deren gewichteter Mittelwert dann die mittlere Temperatur der Probesubstanz im Messspalt mit genügender Genauigkeit repräsentiert. Die beiden Temperaturen werden unmittelbar unter der Oberfläche von Messbecher und Messkörper gemessen, das heisst auch mit diesem Messverfahren muss mit einer minimalen Equilibrierungszeit gerechnet werden, die aber nur einen kleinen Bruchteil der Equilibrierungszeit für das gängige Verfahren der Heizungstemperaturmessung beträgt. Die für die Temperaturmessung notwendige Energie wird in Form von Licht, also berührungslos, zur Stelle der Messung zugeführt, was keine Störung des Drehmomentes des Messkörpers noch der Drehung des Messbechers ergibt. Zur eigentlichen Temperaturmessung wird eine temperaturabhängige elektrische Frequenz erzeugt oder die temperaturabhängige Ausgangsspannung eines elektrischen Widerstandes in eine modulierte Spannung verarbeitet. Das die Messinformation tragende elektrische Signal wird durch kapazitive Auskopplung oder durch optische Übertragung an die Verarbeitungselektronik auf dem feststehenden Geräteteil weitergeleitet, also ebenfalls berührungslos und ohne stöhrende Drehmomente.

Verfahrensvarianten bestehen darin, dass anstelle der Temperaturmessung auf beiden Seiten des Messspaltes und Bildung einer mittleren Temperatur nur die Temperatur entweder an der Messbecher- oder der Messkörperoberfläche gemessen wird.

Das erfindungsgemässe Verfahren und die erfindungsgemässe Vorrichtung sollen anhand der folgenden Figuren detailliert beschrieben werden:

Fig. 1: zeigt das Verfahrensschema für die erfindungsgemässe Temperaturmessung,

Fig. 2: zeigt das entsprechende Vorrichtungsschema für eine Temperaturmessung mit einem temperaturabhängigen Oszillator und

Fig. 3: das entsprechende Vorrichtungsschema für die Temperaturmessung mit einem temperaturabhängigen Widerstand.

Fig. 4: zeigt eine beispielhafte Ausführungsform der Vorrichtung zur Temperaturmessung an der Oberfläche des Messkörpers und

Fig. 5: eine ebensolche zur Temperaturmessung an der Oberfläche des Messbechers.

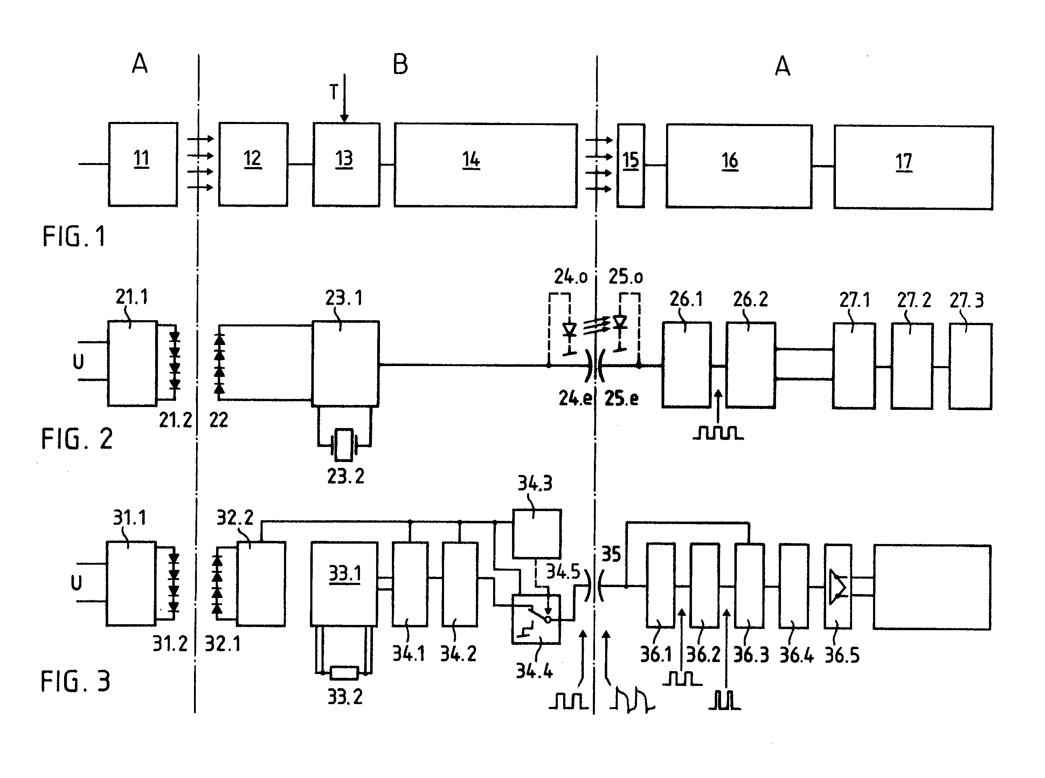

Figur 1 zeigt ein Verfahrensschema für die erfindungsgemässe Temperaturmessung. A und B stellen örtliche Bereiche am Rheologiegerät dar, in denen die einzelnen Verfahrensschritte ablaufen, wobei A stationär und vorwiegend in Umgebungstemperatur ist, während B bewegt und teilweise der zu messenden Temperatur ausgesetzt ist, also den Messkörper oder den Messbecher darstellt. Im Verfahrensschritt 11 wird aus einer zur Verfügung stehenden Energiequelle eine berührungslos übertragbare Energieform erzeugt, beispielsweise Kaltlicht aus elektrischer Energie, und ausgestahlt. Im Verfahrensschritt 12 wird die ausgestrahlte Energie empfangen und in Speiseenergie für die Temperaturmessung umgewandelt. Im Verfahrensschritt 13 wird die Temperatur T gemessen, das heisst aus der Speiseenergie wird ein temperaturabhängiges Signal, beispielsweise eine elektrische Schwingung mit temperaturabhängiger Frequenz oder eine temperaturabhängige Spannung, erzeugt. Im Verfahrensschritt 14 wird das temperaturabhängige Signal der Temperaturmessung, wenn nötig, in ein berührungslos übermittelbares Signal, beispielsweise in eine frequenz- oder amplitudenmodulierte Spannung, umgewandelt und übermittelt, beispielsweise kapazitiv oder optisch. Im Verfahrensschritt 15 wird das übermittelte Signal empfangen und im Verfahrensschritt 16 für die Verarbeitungselektronik vorbereitet und an diese weitergegeben. Im Verfahrensschritt 17 wird das Signal der Temperaturmessung für Steuerung des Gerätes, Protokollierung u. ä. weiter verwendet.

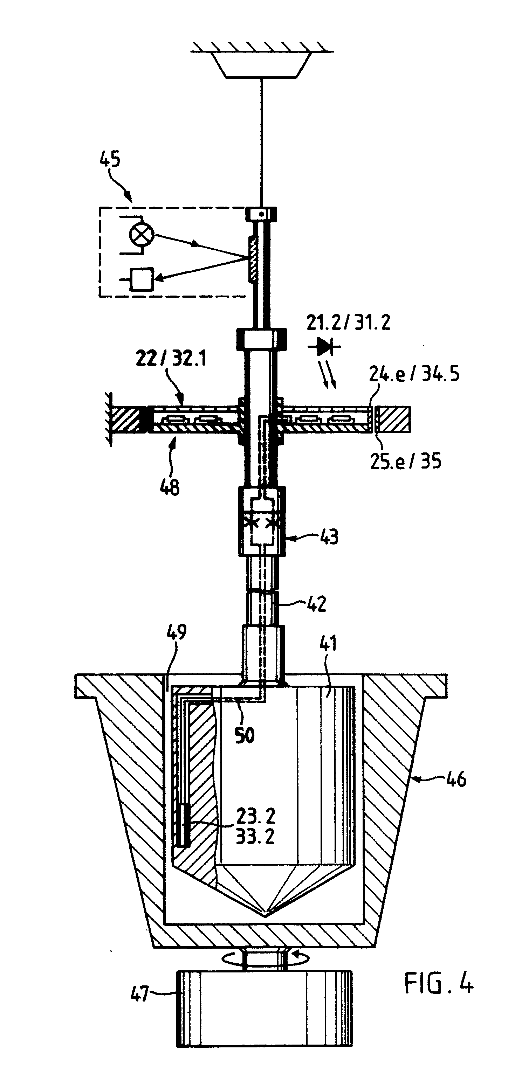

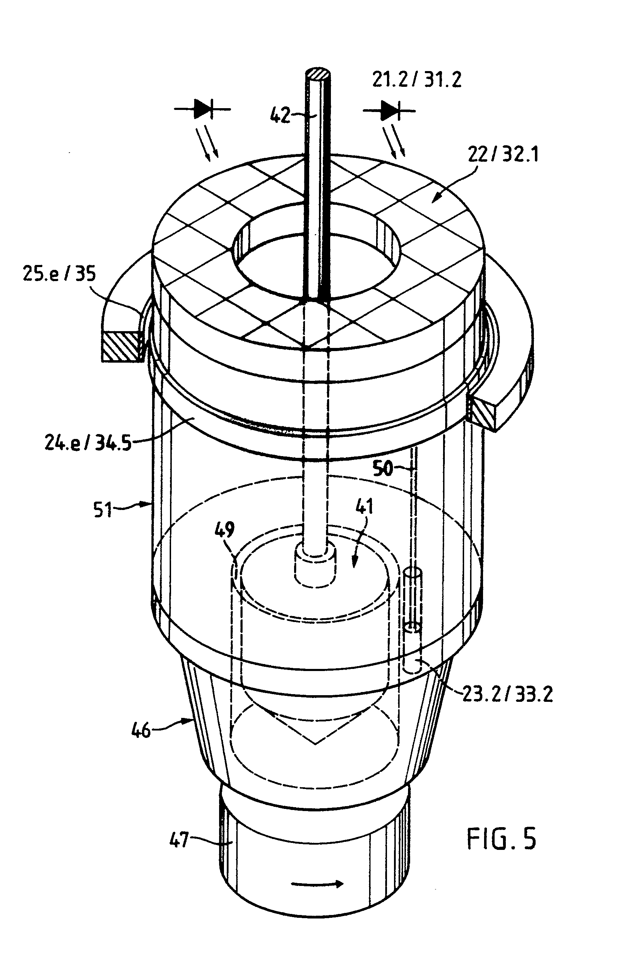

Figur 2 zeigt ein dem Verfahrensschema von Figur 1 entsprechendes Vorrichtungsschema für eine Temperaturmessung mit einein von einem temperaturabhängigen Quarz gesteuerten Oszillator. Die für den Oszillator notwendige Energie wird durch Kaltlichtstrahlung auf den bewegten Geräteteil übertragen und das Signal der Temperaturmessung kapazitiv oder optisch vom bewegten Geräteteil ausgekoppelt. Die reale Anordnung der Vorrichtung zur Temperaturvorrichtung am Rheologiegerät ist in den Figuren 4 und 5 dargestellt.

Über ein Netzgerät 21.1, das aus der Netzspannung die für den Betrieb von mindestens einer LED 21.2 notwendige Spannung erzeugt, werden eine oder mehrere LED 21.2 vom Netz betrieben. Das von den LED emittierte Kaltlicht wird auf dem bewegten Teil des Gerätes von Sonnenzellen (photovoltaischen Zellen) 22 empfangen und in die für den Betrieb eines Oszillators 23.1 notwendige Speisespannung umgewandelt. Der Oszillator 23.1 wird gesteuert von einem speziell geschliffenen, in seiner Schwingfrequenz definiert temperaturabhängigen Quarz 23.2, der im Bereiche des Messspaltes, in dem die Temperatur zu messen ist, angeordnet ist. Die Schwingungen des Oszillators 23.1 werden über einen Kondensator, dessen eine Elektrode 24.e sich auf dem bewegten Geräteteil befindet, die andere 25.e auf einem stationären Geräteteil, kapazitiv ausgekoppelt. Die kapazitiv ausgekoppelten Schwingungen werden durch ein Filter 26.1 derart gereinigt, dass am Ausgang des Filters ein Rechteck(TTL)-Signal zur Verfügung steht. Dieses Rechtecksignal wird über einen Line-Driver 26.2 in ein für die Weiterverarbeitung des Signals verantwortliches Steuergerät oder einen Computer geleitet. Dort wird es von einem Line-Receiver 27.1 empfangen und vorteilhafterweise über einen Optokoppler 27.2 dem Mikroprozessor oder einem vorgeschalteten Interface 27.3 zugeführt.

Die wesentlichen Vorteile dieser, durch Fig. 2 illustrierten Vorrichtung sind die folgenden:

- die Kaltlichtemission und deren Empfang durch Sonnenzellen als Energieübertragung von stationären zu bewegten Geräteteilen ist relativ verlustarm, aber berührungslos und damit wartungsfrei, absolut drehmomentfrei, und ohne störendes Magnetfeld. Gängige Vorrichtungen mit Energieübertragung über Schleifringe erfordern für sich abnützende Schleifbahnen und Kontakte regelmässige Wartung, während eine Energieübertragung mit induktiver Ankoppelung Kräfte und damit ein störendes Drehmoment bewirken.

- Die Temperaturmessung mit einem quarzgesteuerten Oszillator benötigt wenig Energie und wenig Elektronik auf dem bewegten Geräteteil, was sich günstig auf den Raumbedarf und das Trägheitsmoment auswirkt.

- Die kapazitive Auskoppelung der Signale ist trotz geringer Sendeleistung robust, problemlos und drehmomentfrei.

Da aber temperaturabhängige Quarze von genügender Genauigkeit nicht für den ganzen geforderten Temperaturbereich (-20 bis 400°C) erhältlich sind, sondern ohne Kompensationsmassnahmen typisch nur für einen Temperaturbereich von -20 bis 200°C, sind Geräte mit einer Temperaturmessvorrichtung, die nur auf quarzgesteuertem Oszillator beruhen, beschränkt anwendbar.

Eine weitere Ausführungsvariante der erfindungsgemässen Vorrichtung ergibt sich, wenn für die Auskoppelung des Signales nicht das Verfahren der kapazitiven Auskoppelung sondern eine optische Auskoppelung gewählt wird. Von der durch den Oszillator erzeugten Spannung mit temperaturabhängiger Frequenz wird in diesem Falle eine Lichtquelle 24.o, bspw.eine LED, betrieben, deren optisches Signal auf dem stationären Geräteteil von einem entsprechenden Empfänger 25.o, bspw. einer lichtempfindlichen Diode, empfangen und entsprechend weiter verarbeitet wird.

**Figur 3** zeigt ein dem Verfahrensschema von Figur 1 entprechendes Vorrichtungschema für eine Temperaturmessung mittels eines temperaturabhängigen Widerstandes, beispielsweise eines PT100. Die für die Temperaturmessung notwendige Energie wird durch Kaltlichtstrahlung auf den bewegten Geräteteil übertragen und das Signal der Temperaturmessung kapazitiv vom bewegten Geräteteil ausgekoppelt. Die reale Anordnung der Vorrichtung am Gerät ist aus den Figuren 4 und 5 ersichtlich.

Messwiderstände für industrielle Anwendungen sind genormt und daher in ihren Eigenschaften genau bekannt. Für die vorliegende Aufgabe eignet sich z.B. ein Pt100, ein Platinmesswiderstand mit einem Widerstandswert von 100Ω bei 0°C und einem spezifizierten Temperaturbereich von -200 bis 850°C. Relativmessungen auf unter 0,1°C sind damit möglich. Für Absolutmessungen in dieser Genauigkeit sind Eichkurven zu erfassen und entsprechende Korrekturen vorzusehen.

Eine Gruppe von LED 31.2, betrieben von einem Netzgerät 31. 1, emittiert das Kaltlicht, das von Sonnenzellen 32.1 auf dem bewegten Geräteteil empfangen und in elektrische Energie umgewandelt wird. Diese wird von einer Spannungsstabilisierelektronik 32.2, allenfalls zusammen mit einer Spannungsverdoppelung, auf die für den Betrieb eines temperaturabhängigen Widerstandes 33.2, bspw. ein Pt100, notwendige Spannung gebracht. Der PT100 wird mit konstantem Strom gespeist und seine temperaturabhängige Ausgangsspannung über eine Low-power-Referenz 33.1, einen Low-power-Instrumentenverstärker 34.1 und einen Low-power-Verstärker 34.2 zugeführt und verstärkt und dann auf einen Analogschalter 34.4 geleitet.

Der Analog-Schalter 34.4 wird von einem Low-power-Timer 34.3 gesteuert und liefert somit ein Rechtecksignal, dessen Amplitude der Ausgangsspannung des Verstärkers 34.2 entspricht. Das Rechtecksignal wird auf einen Kondensator 34,5/35, geleitet, dessen eine Elektrode 34.5 auf dem bewegten Geräteteil, die andere Elektrode 35 auf dem stationären Geräteteil angebracht ist. Das durch den Kondensator ausgekoppelte Signal entspricht in der Frequenz noch dem vom Analogschalter 34.4 gelieferten Rechtecksignal, seine Form ist aber derart verändert, dass nur noch die ansteigende Flanke dem analogen Ausgangssignal der Temperaturmessung entspricht. Das derart veränderte Signal wird einerseits über einen Komparator 36.1 und einen Monoflop 36.2 geleitet, der ein der ansteigenden Flanke entsprechendes kurzes Signal erzeugt. Andererseits wird das Signal auf ein Sample-and-hold-Element 36.3 geleitet, das mit dem Signal aus dem Monoflop 36.2 gesteuert wird, sodass an seinem Ausgang ein dem analogen Ausgangssignal der Temperaturmessung entsprechendes allerdings nicht lineares Analogsignal ansteht. Dieses wird durch einen Verstärker 36.4 verstärkt und von einem Analogtreiber 36.5 an die für die Weiterverarbeitung verantwortliche Elektronik 37, A/D-Wandler und Steuergerät oder Computer, weitergeleitet.

Die Vorteile dieser, durch Fig. 3 illustrierten Ausführungsform der erfindungsgemässen Vorrichtung sind für die Energieübertragung und die Signalauskoppelung von und zum bewegten Geräteteil dieselben, die weiter oben für die durch Fig. 2 dargestellte Ausführungsform beschrieben wurden. Die Temperaturmessung mittels temperaturabhängigem Widerstand hat den Vorteil, dass sie für das ganze geforderte Temperaturintervall von -20 bis 400°C anwendbar ist. Sie braucht aber bedeutend mehr Energie und mehr Elektronik auf dem bewegten Geräteteil als die Temperaturmessung mittels quarzgesteuertem Oszillator.

Ausführungsvarianten für die erfindungsgemässe Temperaturmessung mit temperaturabhängigem Widerstand ergeben sich durch Verarbeitung des von der effektiven Temperaturmessung gelieferten Analogsignales durch einen speziellen, ausgesuchten, Low-Power-Spannungs-Frequenz-Wandler und kapazitive Auskoppelung seines Ausgangssignales. Der Spannungs-Frequenz-Wandler, der auf dem bewegten Geräteteil lokalisiert sein muss, braucht zwar seinerseits mehr Energie als die beschriebene Variante der Umwandlung in ein amplitudenmoduliertes Rechtecksignal, dafür wird die Auskoppelung robuster und die Elektronik auf der Auswertungsseite bedeutend einfacher (sie entspricht dann der Variante von Fig. 2). Das durch den Spannungs-Frequenz-Wandler erzeugte Signal kann, wie bereits als Variante zur Vorrichtung gemäss Fig. 2 beschrieben, auch über eine optische Auskoppelung auf den stationären Geräteteil übertragen werden.

**Figur 4** zeigt die Anordnung der Messvorrichtung auf dem Rheologiegerät und zwar für eine Temperaturmessung unmittelbar unter der dem Messspalt zugewandten Oberfläche des Messkörpers.

Der Messkörper 41 ist an die Messwelle 42 angeformt, die ihrerseits mit einer Kupplung 43 an einer Elektronikscheibe 48 angeformt ist. Die Kupplung 43 enthält zusätzlich vier elektrische Kontakte für das 4-Draht-Messsystem. Dadurch haben Übergangswiderstände keinen Einfluss auf die Messgenauigkeit. Ausserdem kann der Messkörper beim Reinigen erhitzt werden, ohne dass die Elektronik Schaden nimmt. Zusätzlich können verschieden grosse Messkörper an **eine** Elektronik angeschlossen werden. Über der Elektronikscheibe 48 ist das gerätespezifische Drehmoment-Messsystem 45 angebracht. Der Messbecher 46 wird vom Antriebsmotor 47 angetrieben. Der Messbecherhalter und die Heizung sind in der Figur nicht dargestellt. Die senkrecht zur Rotationsachse stehende Elektronikscheibe 48 umfasst die auf dem bewegten Geräteteil (Messkörper) notwendigen elektronischen Elemente, nämlich:

- für die Vorrichtung gemäss Schema in Figur 2 die Sonnenzellen 22, der Oszillator 23.1 und die eine Elektrode 24.e des Auskoppelungskondensators (oder Lichtquelle 24.o),
- für die Vorrichtung gemäss Schema in Figur 3 die Sonnenzellen 32.1, die Spannungsstabilisier-Elektronik 32.2, die Lowpower-Referenz 33.1, die Verstärker 34.1 und 34.2, der Timer 34.3 der Schalter 34.4 und die Elektrode 34.5 des Auskoppelungskondensators.

Die Sonnenzellen 22/32.1 sind auf der vom Messkörper 41 abgewandten Oberfläche der Elektronikscheibe 48 angebracht, die anderen eklektronischen Elemente zwischen den beiden Scheibenoberflächen. Rund um den Umfang der Scheibe 48 verläuft ein Metallband, das als Elektrode 24/34.5 des Auskopplungskondensators beschaltet ist. Diese Elektrode kann auch statt rund um den Umfang der Scheibe 48 verlaufend (zylinderförmig) paarig flächenförmig ausgebildet sein, sodass das gesendete Signal nicht nur temperaturabhängig ist, sondern auch von der Drehgeschwindigkeit des Messkörpers abhängt und zu deren Bestimmung weiterverwendet werden kann. In geeignetem Abstand von dieser Elektrode ist auf einem stationären Geräteteil die Gegenelektrode 25/35 des Auskoppelungskondensators angebracht. Die Elektronikscheibe 48 ist thermisch isoliert vom Messkörper angebracht, sodass die Elektronik durch die Wärmestrahlung keinen Schaden nimmt. An einer den Sonnenzellen 22/32.1 gegenüberliegenden, geeigneten stationären Oberfläche des Gerätes sind die LED 21.2/31.2 angebracht, in einem für die Emission und den Empfang des Kaltlichtes geeigneten Abstand von den Sonnenzellen 22/23.1 auf der Scheibe 48.

Im Messkörper 41 selbst ist die Temperatursonde positioniert, also der Quarz 23.2 oder der temperaturabhängige Widerstand 33.2, in einer Bohrung, die direkt unter die dem Messspalt 49 zugewandte Oberfläche reicht, und mit durch den Messkörper 41 und die Messwelle 42 geführten Leitungen 50 mit der Elektronik in der Scheibe 48 verbunden.

Statt des Kopplungskondensators, gebildet aus den Elektroden 24.e und 25.e, lässt sich für das Übertragen des Messsignales vom bewegten zum feststellenden Geräteteil eine optische Kopplung verwenden. Diese kann apparativ analog zur Energieeinkopplung ausgeführt werden, d.h. es werden auf dem beweglichen Teil kaltlichtemittierende LED mit dem in seiner Frequenz temperaturabhängigen Rechtecksignal gespeist und das Signal von Sonnenzellen auf dem feststehenden Geräteteil aufgenommen und weiterverarbeitet. Mit besonders kleinem Aufwand lässt sich dies speziell an Rheologiegeräten bewerkstelligen, deren Messkörper über die Drehmomentregelung ständig in gleicher Position gehalten werden. Es genügt dann die Signalauskopplung an einer einzigen Stelle.

**Figur 5** zeigt die Anordnung der erfindungsgemässen Vorrichtung zur Temperaturmessung unmittelbar unter der dem Messspalt zugewandten Oberfläche des Messbechers.

Die Anordnung von Messkörper 41, Messwelle 42, Messbecher 46 und Antriebsmotor 47 entspricht der im Zusammenhang mit Figur 4 beschriebenen Anordnung. Der Messbecher 46 besitzt aber einen zusätzlichen Aufbau 51, der auf der gegen die Aufhängung des Messkörpers 41 gewandten Oberfläche des Messbechers angebracht ist und die Form eines Hohlzylinders hat. Auf der der Aufhängung des Messkörpers zugewandten Seite dieses Aufsatzes 51 ist die auf dem bewegten Teil für die Temperaturmessung notwendige Elektronik angebracht in gleicher Weise wie beschrieben für die Elektronikscheibe 48. Der Steuerquarz 23.2 oder der temperaturabhängige Widerstand 33.2 ist in einer zur Rotationsachse parallelen Bohrung so nahe wie möglich an der dem Messspalt 49 zugewandten Innenoberfläche des Messbechers 46 positioniert und mit Leitungen 50 mit der Elektronik im Aufsatz 51 verbunden. Der dem Messbecher 46 zugewandte Teil des Aufsatzes 51 besteht vorteilhafterweise aus einem warmeisolierenden Material.

Auf stationären Geräteteilen sind in geeigneten Abständen zu den bewegten Teilen die LED 21.2/31.2 und die Gegenelektrode 25/35 des Auskoppelungskondensators angebracht.

In Kenntnis der beiden Anordnungen nach Fig. 4 und Fig. 5 ist es dem Fachmann unschwer möglich, diese zu kombinieren, sodass die Temperaturen auf beiden Seiten des Messspaltes nahe der Oberfläche von Messbecher und Messkörper gleichzeitig gemessen werden können, ohne die rheologische Messanordnung zu beeinträchtigen. Es wird dem Fachmann auch keine Schwierigkeiten machen, den Auskopplungskondensator durch eine optische Auskopplung zu ersetzen.

## Patentansprüche

1. Verfahren zur Temperaturmessung in einem Rheologiegerät, **dadurch gekennzeichnet,** dass die Temperatur im Messspalt mit mindestens einem Temperatursensor gemessen wird, der im Wandbereich einer der beiden relativ zueinander bewegten Scherflächen angeordnet ist und dass das temperaturabhängige Messsignal des Sensors berührungs- und kräftefrei ausgekoppelt und die Betriebsenergie für den Sensor berührungs- und kräftefrei eingekoppelt wird.

2. Verfahren nach Anspruch 1, **dadurch gekennzeichnet,** dass die Energieeinkopplung mittels Licht und die Signalauskopplung elektrisch oder optisch durchgeführt wird.

3. Verfahren nach Anspruch 2, **dadurch gekennzeichnet,** dass die Temperatur auf mindestens einer Seite des Messspaltes (49), direkt unter der den Messspalt begrenzenden Oberfläche des Messkörpers (41) und/oder des Messbechers (46) gemessen wird, dass die für die Temperaturmessung notwendige Energie durch Sonnenzellen, die durch Lichtemission gespeist werden, berührungs- und kräftefrei auf den Messkörper (41) und/oder den Messbecher (46) übertragen wird und dass das temperaturabhängige Signal der Messung ebenfalls berührungsfrei vom Messkörper (41) und/oder Messbecher (46) ausgekoppelt wird.

4. Verfahren nach einem der Ansprüche 1 bis 3, **dadurch gekennzeichnet,** dass als temperaturabhängiges Messsignal eine modulierte Spannung verwendet wird.

5. Verfahren nach Anspruch 4, **dadurch gekennzeichnet,** dass als temperaturabhängiges Signal die Frequenz eines quarzgesteuerten Oszillators (23) verwendet wird.

6. Verfahren nach Anspruch 4, **dadurch gekennzeichnet,** dass als temperaturabhängiges Signal die zu einer amplitudenmodulierten Rechteckspannung umgewandelte Ausgangsspannung eines temperaturabhängigen Widerstandes (33) verwendet wird.

7. Verfahren nach Anspruch 4, **dadurch gekennzeichnet,** dass als temperaturabhängiges Signal die zu einer frequenzmodulierten Spannung umgewandelte Ausgangsspannung eines temperaturabhängigen Widerstandes (33) verwendet wird.

8. Verfahren nach einem der Ansprüche 4 bis 7, **dadurch gekennzeichnet,** dass das temperaturabhängige Signal kapazitiv vom Messkörper (41) und/oder Messbecher (46) auf einen stationären Teil des Gerätes ausgekoppelt wird.

9. Verfahren nach einem der Ansprüche 4, 5 oder 7, **dadurch gekennzeichnet,** dass das temperaturabhängige Signal optisch vom Messkörper (41) und/oder vom Messbecher (46) auf einen stationären Teil des Gerätes ausgekoppelt wird.

10. Verfahren nach einem der vorstehenden Ansprüche, **dadurch gekennzeichnet,** dass die Temperatur im Messspalt mit zwei oder mehr Temperatursensoren gemessen wird und dass die Temperatur durch eine Kombination der Messwerte der einzelnen Temperatursensoren bestimmt wird.

11. Vorrichtung zur Temperaturmessung im Messspalt eines Rheologiegerätes, **dadurch gekennzeichnet,** dass sie zur Messung der Temperatur im Messspalt mindestens einen Temperatursensor im Wandbereich einer der beiden relativ zueinander bewegten Scherflächen aufweist und dass zur berührungs- und kräftefreien Auskopplung des temperaturabhängigen Messsignals des Sensors elektrische oder optische Uebertragungsmittel und zur berührungs- und kräftefreien Einkopplung von Betriebsenergie für den Sensor lichtsensitive Stromerzeugungsmittel vorgesehen sind.

12. Vorrichtung nach Anspruch 11, **dadurch gekennzeichnet,** dass sie auf dem Messkörper (41) und/oder auf dem Messbecher (46) Elemente zur Temperaturmessung aufweist, dass sie auf mit dem Messkörper (41) und/oder dem Messbecher (46) starr verbundenen Teilen elektronische Elemente umfasst und dass sie auf stationären Geräteteilen lichtemittierende Mittel und Empfangs- und Verarbeitungsmittel für elektronische Signale umfasst.

13. Vorrichtung nach Anspruch 12, **dadurch gekennzeichnet,** dass sie auf einem stationären Geräteteil angebrachte LED (21.2/31.2) und auf einer an der Messwelle (42) senkrecht zur Rotationsachse befestigten Elektronikscheibe (48) und/oder auf einem auf dem Messbecher (46) angebrachten Aufsatz (51) positionierte Sonnenzellen (22/32.1) umfasst.

14. Vorrichtung nach Anspruch 12 oder 13, **dadurch gekennzeichnet,** dass sie mindestens eine, an einem stationären Geräteteil angebrachte Elektrode (25.e/35), und eine um den Umfang der Scheibe (48) und/oder eine um den Umfang des Aufsatzes (51) verlaufende, zylinderförmige oder begrenzt paarig flächenförmige Elektrode (24.e/34.5) umfasst, wobei je eine stationäre und eine, bewegte Elektrode als Elektroden eines Auskopplungskondensators beschaltet sind.

15. Vorrichtung nach einem der Ansprüche 12 oder 13, **dadurch gekennzeichnet,** dass sie für eine optische Auskoppelung des temperaturabhängigen Signales an mindestens einem stationären Geräteteil lichtempfindliche Mittel (25.o) und an mindestens einem bewegten Geräteteil lichtemittierende Mittel (24.o) umfasst.

16. Vorrichtung nach einem der Ansprüche 12 bis 15, **dadurch gekennzeichnet,** dass sie in Bohrungen, die unmittelbar unter der dem Messspalt (49) zugewandten Oberfläche des Messkörpers (41) und/oder des Messbechers (46) verlaufen, Messquarze mit temperaturabhängiger Schwingfrequenz oder temperaturabhängige Widerstände aufweist.

17. Vorrichtung nach Anspruch 16, **dadurch gekennzeichnet,** dass in den Bohrungen PT100 angebracht sind.

18. Vorrichtung nach einem der Ansprüche 11 bis 17, **dadurch gekennzeichnet,** dass zur Umformung und Auskopplung einer temperaturabhängigen Sensorspannung ein spannungsgesteuerter Oszillator (VCO) verwendet wird.

FIG. 1

FIG. 2

FIG. 3

EP 0 454 952 A1

FIG. 4

FIG. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-U-8 512 907  (DYNAMIT-NOBEL AG) <br> * Einführung; Seite 3, Zeile 15 - Seite 4, Zeile 13; Seite 9, Zeile 23 - Seite 10, Zeile 12; Seite 14, Zeilen 1-13; Figuren 1A,1B * <br> — — — | 1,11 | G 01 K 13/08 <br> G 01 N 11/14 |
| X,Y | EP-A-0 075 620  (FUJI ELECTRIC CO., LTD et al.) <br> * Figuren 8,9,11,12,13; Seite 18, Zeilen 8-22; Seite 19, Zeilen 6-17; Seite 23, Zeile 16 - Seite 24, Zeile 1; Seite 24, Zeile 27 - Seite 28, Zeile 3 * <br> — — — | 1-4,7, 9-12,15, 18 | |
| X | DE-A-2 852 679  (ROBERT BOSCH GmbH) <br> * Einführung; Figuren 1A,1B,2,3; Seite 7, Abschnitt 3 - Seite 12, Abschnitt 3 * <br> — — — | 1-4,6,7,9, 11-13, 15-18 | |
| X,Y | DE-A-2 937 656  (NEUMÜNSTERSCHE MASCHINEN- UND APPARATENBAU GmbH) <br> * Figur 1; Seite 6, Zeilen 8-18; Seite 7, Zeilen 4-14,21-36 * <br> — — — | 1-4,7,9, 11,12, 15-18 | |
| X,Y | PATENT ABSTRACTS OF JAPAN, Band 10, Nr. 195 (P-475)[2251], 9. Juli 1986; <br> & JP-A-61 38 533 (TOKUDEN K.K.) 24-02-1986 <br> — — — | 1,2,4,11, 16,17 | |
| X,Y | PATENT ABSTRACTS OF JAPAN, Band 10, Nr. 84 (P-442)[2141], 3. April 1986; <br> & JP-A-60 220 833 (TOSHIBA K.K.) 05-11-1985 <br> — — — — — | 1,2,4,5, 11,13,16 | RECHERCHIERTE SACHGEBIETE (Int. Cl.5) <br><br> G 01 K <br> G 01 N |

Der vorliegende Recherchenbericht wurde für alle Patentansprüche erstellt

| Recherchenort | Abschlußdatum der Recherche | Prüfer |
|---|---|---|
| Den Haag | 12 August 91 | VISSER F.P.C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

------------------------------------------------

& : Mitglied der gleichen Patentfamilie, übereinstimmendes Dokument